# EUROPEAN PATENT APPLICATION

(11) **EP 3 827 713 A2**
(43) Date of publication of application: **02.06.2021**
(21) Application number: 20205863.2
(22) Date of filing: 05.11.2020
(51) Int. Cl.: A47J 31/36, A47J 31/44, B67D 1/08, B67D 1/00, A47J 31/52

(54) **BEVERAGE BREWING DEVICE, BREWING METHOD, TUBULAR CONTAINER, AND CIRCUIT SYSTEM OF BEVERAGE BREWING DEVICE**

(30) Priority: 05.11.2019 US 201962930664 P; 04.12.2019 US 201962943359 P; 21.05.2020 CN 202010445683
(71) Applicant: Wei, Hong-Fan, Taipei City 11445 (TW)
(72) Inventor: Wei, Hong-Fan, Taipei City 11445 (TW)
(74) Representative: Viering, Jentschura & Partner mbB Patent- und Rechtsanwälte

(57) **Abstract**

A beverage brewing device (10, 10'), a brewing method, a tubular container (60, 60', 70, 201), and a circuit system of the beverage brewing device (10, 10') are provided. The circuit system includes a microprocessor (20) and a plurality of circuit components. The brewing method includes scanning an identification tag (222) on the tubular container (60, 60', 70, 201) to obtain brewing parameters and controlling a water inputting module (209), a temperature adjusting module (211), a water outputting module (213) and an air adding module (215, 215'). The water inputting module (209) controls a volume and a flowrate of water supplied to the tubular container (60, 60', 70, 201), the temperature adjusting module (211) controls temperature and temperature controlling sequence of water supplied to the tubular container (60, 60', 70, 201), the water outputting module (213) determines an amount of time and the flowrate of water outputted from the tubular container (60, 60', 70, 201) according to the operating parameters, and the air adding module (215, 215') determines whether or not to add air or an amount of air to add into the water.

## Description

### FIELD OF THE DISCLOSURE

The present disclosure relates to a device capable of automatically brewing beverages according to parameters that are set, and more particularly to a beverage brewing device, a brewing method, a tubular container, and a circuit system of the beverage brewing device.

### BACKGROUND OF THE DISCLOSURE

Beverages can usually be obtained through brewing, purchasing commercially available packaged beverages, and purchasing from an on-site beverage store.

When making beverages, performing a proper brewing method is difficult for ordinary people, and even if acceptable beverages are made through trial and error, the beverages often lose their original flavors.

A conventional method of brewing beverages require a specific brewing machine and ingredient capsule packages that are adapted to the brewing machine, the ingredient capsule packages are filled with ingredients of a fixed portion by manufacturers, and a user can brew beverages by disposing the ingredient capsule packages in the specific brewing machine.

### SUMMARY OF THE DISCLOSURE

In response to the above-referenced technical inadequacies, the present disclosure provides a beverage brewing device (operable for both a predetermined formula set by manufacturers and a formula determined by a user), a brewing method, a tubular container, and a circuit system of the beverage brewing device.

In one aspect, the present disclosure provides a beverage brewing device including a built-in or external sink, a pump, a container carrying device for configuring a tubular container, and a beverage outlet for injecting beverages brewed from contents in the tubular container into a container. The beverage brewing device further includes a circuit system including: a microprocessor, a scanning module, and a parameter controlling module. The microprocessor is connected to a plurality of circuit components in the circuit system and controls an operation of the beverage brewing device. The scanning module is utilized to scan an identification tag on the tubular container of the beverage brewing device, and the microprocessor obtains brewing parameters read from the identification tag. The parameter controlling module receives the brewing parameters and generates operating parameters that control a water inputting module, a temperature adjusting module, a water outputting module and an air adding module.

Furthermore, the water inputting module controls a volume and a flowrate of water supplied to the tubular container according to the operating parameters, the temperature adjusting module controls temperature of water supplied to the tubular container by controlling the temperature and adjusting a temperature controlling sequence according to the operating parameters, the water outputting module determines an amount of time and the flowrate of water outputted from the tubular container according to the operating parameters, and the air adding module determines whether or not to add air into the water, or an amount of air to be added into the water.

In another aspect, the present disclosure provides a circuit system of a beverage brewing device. The circuit system includes a microprocessor connected to a plurality of circuit components in the circuit system controlling an operation of the beverage brewing device. The circuit components include a scanning module and a parameter controlling module. The scanning module is utilized for scanning an identification tag on the tubular container of the beverage brewing device, and the microprocessor obtains brewing parameters read from the identification tag. The parameter controlling module receives the brewing parameters and generates operating parameters that control a water inputting module, a temperature adjusting module, a water outputting module and an air adding module. The water inputting module controls a volume and a flowrate of water supplied to the tubular container according to the operating parameters, the temperature adjusting module controls temperature of the water supplied to the tubular container by controlling the temperature and adjusting the temperature controlling sequence according to the operating parameters, the water outputting module determines an amount of time and the flowrate of water outputted from the tubular container according to the operating parameters, and the air adding module determines whether or not to add air into the water, or an amount of air to be added into the water.

In certain embodiments, the circuit system further includes an interface controlling module presenting the brewing parameters through a display panel and providing a user interface for adjusting the brewing parameters.

In certain embodiments, the identification tag is an identification pattern or a wireless identification tag.

In certain embodiments, the temperature adjusting module controls a thermoelectric chip, a condensing tube, or a heating tube thereof, so as to control the temperature through heating or cooling.

In certain embodiments, the temperature adjusting module controls receives a temperature feedback from a thermometer of the water outputting module and the microprocessor continuously adjusts the temperature of the water outputted from the tubular container.

In yet another aspect, the present disclosure provides a brewing method, which is adapted to a beverage brewing device. The brewing method includes: scanning an identification tag on a tubular container of the beverage brewing device, and obtaining brewing parameters corresponding to contents in the identification tag by a microprocessor; generating operating parameters that control a water inputting module, a temperature adjusting module, a water outputting module and an air adding module through a parameter controlling module controlled by the microprocessor according to the brewing parameters, so as to operate a brewing procedure. The brewing procedure includes: the water inputting module controlling a volume and a flowrate of water supplied to the tubular container according to the operating parameters; the temperature adjusting module controlling temperature of the water supplied to the tubular container by controlling the temperature and adjusting the temperature controlling sequence according to the operating parameters; the water outputting module determining an amount of time and the flowrate of water outputted from the tubular container according to the operating parameters; the air adding module determining whether or not to add air into the water, or an amount of air to be added into the water; and outputting water to the tubular container to brew the contents in the tubular container and generating a beverage.

In certain embodiments, the step of the air adding module determining whether or not to add air into the water, or the amount of air to be added into the water according to the operating parameters, is conducted after the water outputting module outputs the water, or before the temperature adjusting module adjusts the temperature.

In yet another aspect, the present disclosure provides a tubular container having openings on two sides thereof respectively. The tubular container includes a tube wall, and an entrance component and an exit component disposed on the two sides of the tube wall. The entrance component and the exit component are disposed on the two sides of the tube wall such that the contents are sealed among the entrance component, the exit component, and the tube wall.

In certain embodiments, the entrance component and the exit component are different, similar, or the same thin film materials or devices, and are utilized to seal the contents inside. In addition, the entrance component and the exit component are made of a penetrable material, or a material that is soluble in a certain solvent.

In certain embodiments, the tubular container is filled with a single ingredient or a mixture of multiple ingredients mixed in a predetermined ratio.

In certain embodiments, the tubular container includes a combination of a plurality of tubular containers filled with different contents, and the tubular containers are connected to one another through a buckle structure, an air-tight structure, or a sheath connector structure.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1A is a schematic view of a beverage brewing device in one embodiment of the present disclosure.
FIG. 1B is a schematic view of the beverage brewing device in another embodiment of the present disclosure.
FIG. 2 is a block diagram of a circuit system of the beverage brewing device in one embodiment of the present disclosure.
FIG. 3 is a block diagram showing an operation of components of the beverage brewing device in one embodiment of the present disclosure.
FIG. 4 is a block diagram showing the operation of the components of the beverage brewing device in another embodiment of the present disclosure.
FIG. 5 is a flowchart showing the beverage brewing device controlling a brewing procedure according to brewing parameters in another embodiment of the present disclosure.
FIG. 6A and FIG. 6B are each a sectional schematic view of a tubular container in one embodiment of the present disclosure.
FIG. 7A is a sectional schematic view of the tubular container in another embodiment of the present disclosure.
FIG. 7B is a schematic view of the tubular container in another embodiment of the present disclosure.
FIG. 8 is a schematic view showing the tubular container of the beverage brewing device in use in one embodiment of the present disclosure.
FIG. 9 is a schematic view showing the tubular container of the beverage brewing device in use in another embodiment of the present disclosure.
FIG. 10 is a schematic view showing the tubular container of the beverage brewing device in use in yet another embodiment of the present disclosure.
FIG. 11 is a schematic view showing a tubular container adjustably used in cooperation with brewing of the present disclosure.
FIG. 12 is a schematic view showing the tubular container of the beverage brewing device in use in still another embodiment of the present disclosure.
FIG. 13 is a schematic view showing the beverage brewing device used in cooperation with the tubular container to brew beverages in one embodiment of the present disclosure.
FIG. 14 is a schematic view showing the beverage brewing device used in cooperation with the tubular container to brew beverages in another embodiment of the present disclosure.
FIG. 15 is a schematic view of the present disclosure showing the tubular container having an identification tag thereof.
FIG. 16 is a schematic view of the present disclosure showing the tubular container having another identification tag thereof.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

A beverage brewing device, a circuit system thereof, and a brewing method operated by the beverage brewing device are provided in the present disclosure. A tubular container adapted to the beverage brewing device is further provided, which is filled with a single ingredient or a mixture of multiple ingredients, and a user can have different ingredients in cooperation with different brewing methods according to personal preferences.

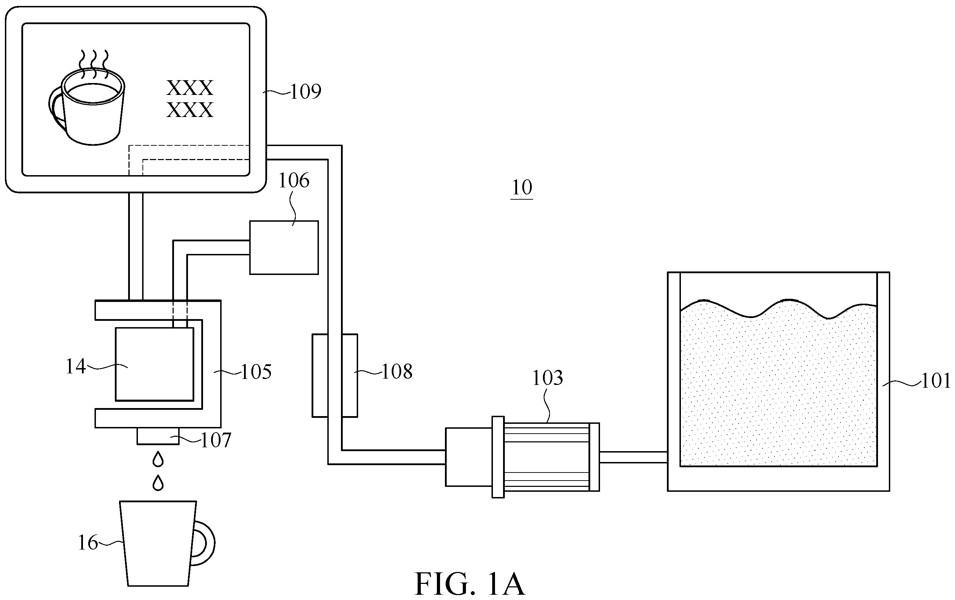

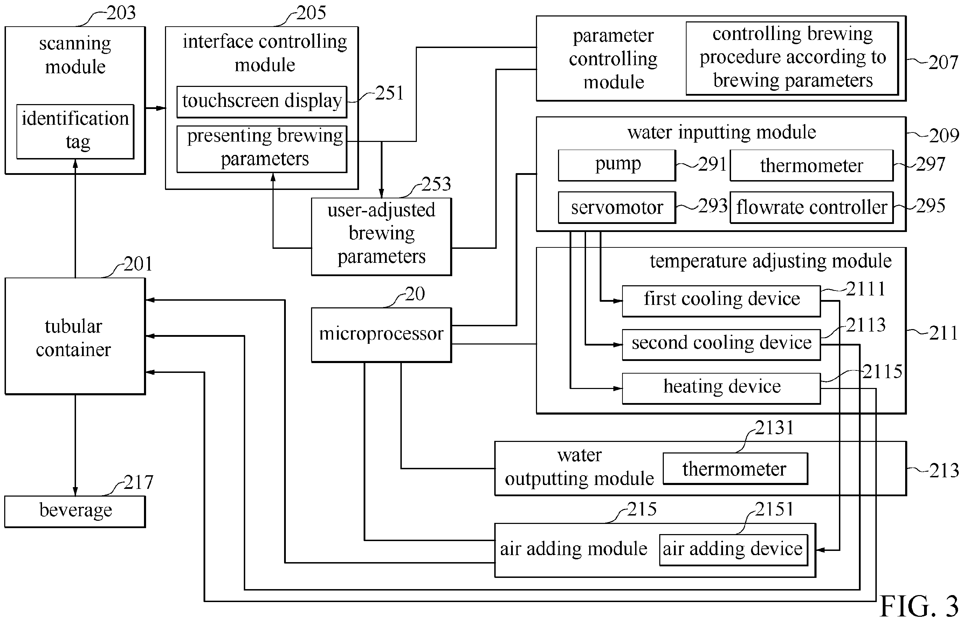

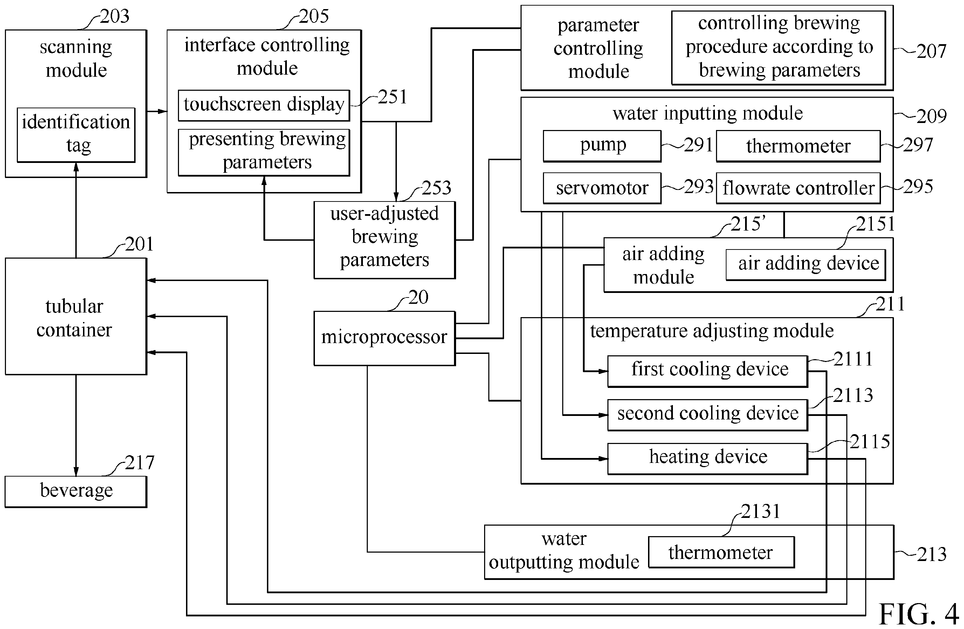

FIG. 1A is a schematic view of a beverage brewing device 10 in one embodiment of the present disclosure. Details of circuits shown in FIG. 1A can be referred to FIG. 3 and FIG. 4. As shown in FIG. 1A, the beverage brewing device 10 includes a built-in or external sink 101. Water (or certain fluid) can be transferred to a container carrying device 105 configured with the tubular containers 14 by a pump 103 through a pipeline. A temperature adjusting device 108 can be disposed on the pipeline to adjust temperature of the water, and a beverage can then be brewed from ingredients in the tubular containers 14. The beverage can be filled into a container, such as a cup 16 as shown in FIG. 1A, through a beverage outlet 107.

In one of the embodiments, a display panel 109 can be disposed on the beverage brewing device, so as to present information that notify the user brewing the beverages. The display panel 109 further provides a control interface, such that the user can adjust the brewing parameters and select the brewing methods according to user preferences. After the brewing method is decided by the user, the beverage brewing device generates a command and conducts a process of brewing the beverages through a processor thereof controlling the circuit components.

In one of the embodiments, the temperature adjusting device 108 can be adopted with a thermoelectric chip, in cooperation with setting parameters. When a current is conducted to a thermoelectric material of the thermoelectric chip through an electrode, an endothermic or an exothermic effect occurs on a material interface of the thermoelectric material, thus allowing the cooling or heating of the water or a certain fluid in the pipeline to be controlled through adjusting the current and directions of the current.

In one of the embodiments, the beverage brewing device 10 can include an air adding device 106, and an air tube of the air adding device 106 is connected to the container carrying device 105 and extended into the tubular container 14 to add air to contents in the tubular container 14, whereas the air is added into the tubular container 14 after the water is transferred to the tubular container 14. However, in another embodiment, the air can be added into the water before the water is transferred to the tubular container 14. Timing of adding the air is determined by the brewing parameters, and related descriptions of the aforementioned embodiments can be referred to FIG. 3 and FIG. 4.

It is worth mentioning that the tubular container 14 of the container carrying device 105 can be a container filled with extracts, e.g., tea extracts, fruit extracts, herb extracts, essence extracts (ingredients mixed in a predetermined ratio), concentrates, etc. Furthermore, the contents can also be tea leaves, coffee powder, juice powder, and Chinese medicine powder. For example, a formula of the extracts can be represented as one of the following: juice concentrate + sparkling water = 100% juice soda, juice concentrate powder + sparkling water = 100% juice soda, juice extract + sparkling water = 100% juice soda, or juice extract powder + sparkling water = 100% juice soda. Therefore, the juice concentrate or the juice extract is able to be reconstituted with sparkling water into 100% juice, and transforming the 100% juice into juice soda.

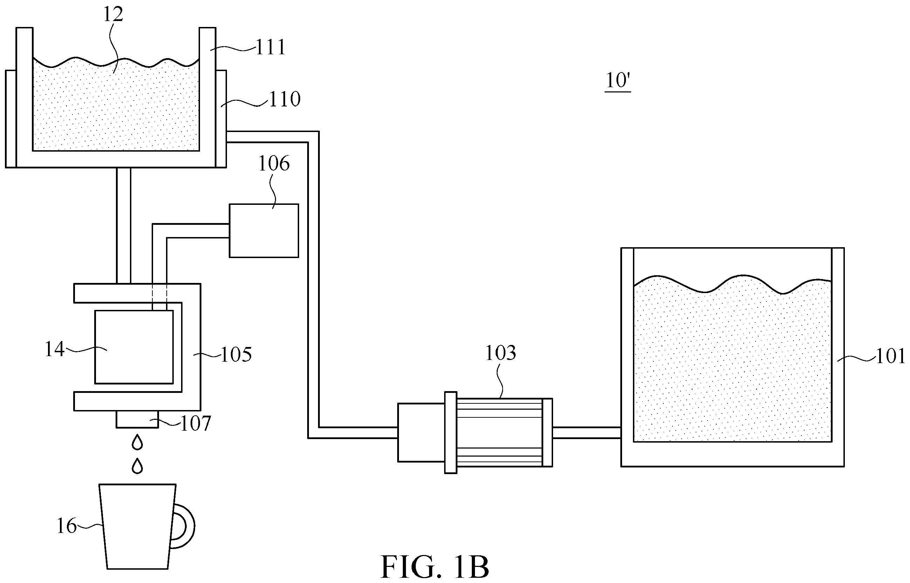

Reference is made to FIG. 1B, which is a schematic view of the beverage brewing device 10' in another embodiment of the present disclosure. The main difference between the beverage brewing device 10' and the beverage brewing device 10 shown in FIG. 1A is that the water (or certain fluid) from the sink 101 is filled into a tank 111 by a pump 103, and the water is configured to be a prepared-for-brewing water 12, i.e., water that is prepared for brewing, as shown in FIG. 1B. In one embodiment, the water in the tank 111 can be transferred to the tubular container 14 of the container carrying device 105 after the temperature of the water is adjusted by the temperature adjusting device 110 covering the tank 111 according to a setting, a beverage can then be brewed from ingredients in the tubular containers 14, and the beverage can be filled into a cup 16 through the beverage outlet 107. The temperature adjusting device 110 can also be adopted with thermoelectric chip, in cooperation with setting parameters, which heats or cools the prepared-for-brewing water 12 in the tank 111.

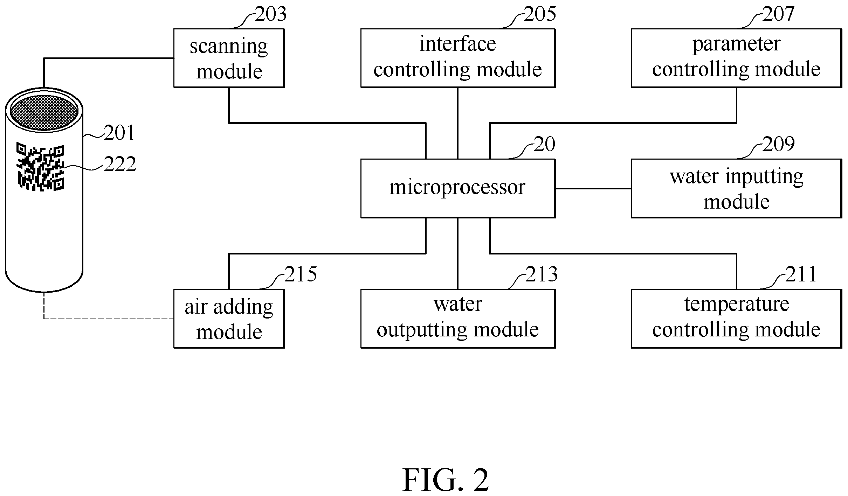

FIG. 2 is a block diagram of a circuit system of the beverage brewing device in one embodiment of the present disclosure. The circuit system includes a microprocessor 20, and a plurality of circuit components connected to the microprocessor 20. The circuit components include a tubular container 201, a scanning module 203, an interface controlling module 205, a parameter controlling module 207, a water inputting module 209, a temperature adjusting module 211, a water outputting module 213, and an air adding module 215. The microprocessor 20 is utilized to control an operation of the beverage brewing device, including processing functions and signals of the circuit components.

According to one of the embodiments, when the tubular container 201 with an identification tag 222 is configured in the beverage brewing device, the microprocessor 20 detects the presence of the tubular container 201 through related structures or electrical signals, and controls the scanning module 203 to scan the identification tag 222. The identification tag 222 can be an identification pattern or a wireless identification tag, which can be patterns such as one-dimensional bar code, two-dimensional code, or patterns that are coded in a certain manner. The two-dimensional code can be a quick response code (QR code), and the wireless identification tag can be a radio frequency identification tag (RFID tag), which is recorded with a wireless identification signal. The scanning module 203 can be a scanner that identifies patterns or RFID tags, which reads the information recorded therein.

The microprocessor 20 obtains the brewing parameters that are read from the identification tag 222 via the scanning module 203. Afterwards, in one embodiment, the beverage brewing device includes the interface controlling module 205, which informs the user of the brewing parameters and provides a function for adjustments. For example, the display panel which presents the brewing parameters can be provided. For example, the formulas of different extracts, which are provided by manufacturers providing the contents of the tubular container 201, are recorded in the identification tag 222, in a manner of encoding the brewing parameters in the identification tag 222. The microprocessor 20 can automatically brew the beverages (e.g., tea and juice) according to the brewing parameters obtained through reading the codes. The brewing parameters can include a ratio of water, a water temperature, and ingredients of additives, as well as time, pressure, temperature, amount of air added for brewing beverages.

The interface controlling module 205 provided in the present disclosure provides the user interface, e.g., touchscreen, buttons, etc., which provide the user for adjusting the brewing parameters according to personal preferences, or applying the default brewing parameters set by the manufacturers. The following brewing procedure will only continue after determining the brewing parameters.

Afterwards, the microprocessor 20 provides the obtained brewing parameters to the parameter controlling module 207, and the parameter controlling module 207 generates operating parameters that control the circuit components including the water inputting module 209, the temperature adjusting module 211, the water outputting module 213, and the air adding module 215, according to the brewing parameters.

For example, the water inputting module 209 includes the pump connected to the sink, and the water inputting module 209 controls volume and flowrate of water inputting the tank through the pipeline, according to the operating parameters generated by the parameter controlling module 207, and then the water is outputted in the tubular container 201. The water inputting module 209 can also monitor water volumes of the sink and the tank. The sink is configured with the temperature adjusting module 211 that controls cooling, heating, and temperature controlling sequence of the contents in the tubular container 201 according to the operating parameters. Moreover, some of the brewing procedures require heating up and cooling down rapidly; or conversely, heating up and cooling down slowly. During the brewing procedure, when the contents reside in the tubular container 201, the water outputting module 213 can determine time and flowrate of water outputted from the tubular container 201 according to the operating parameters, and then the processor 20 controls the air adding module 215 to determine whether or not to add air, or the amount of air to add to the beverage according to the operating parameters.

It is worth mentioning that the water in the sink, the tank, and the water being transferred can be substituted by other fluids, and the fluid can also brew the contents in the tubular container 201 through the water inputting module 209, the temperature adjusting module 211, the water outputting module 213 and the air adding module 215, and then be outputted to a specific container.

Furthermore, the content in the tubular container 201 can be an ingredient with a single component (e.g., tea leaves and coffee powder), or a mixture of multiple ingredients in a predetermined ratio. In one embodiment, the tubular container 201 can be configured as a combination of a plurality of (two or more) tubular containers filled with different contents, so as to brew proper beverages according to the brewing parameters.

FIG. 3 is a block diagram showing an operation of components of the beverage brewing device in one embodiment of the present disclosure. In one embodiment, the beverage brewing device includes the microprocessor 20 that controls the operation thereof. The beverage brewing device receives the tubular container 201 through certain structures, and the microprocessor 20 controls the scanning module 203 to scan the identification tag on the tubular container 201 and read the brewing parameters from the identification tag, and controls the interface controlling module 205 to present the brewing parameters and inform the user of adjustments to the brewing parameters. The interface controlling module 205 that presents the brewing parameters can provide a touchscreen display 251 which allows the user to adjust the default brewing parameters provided by the manufacturers (user-adjusted brewing parameters 253). After adjusting the brewing parameters, the brewing parameters can be inputted into the parameter controlling module 207, which then controls the brewing procedure accordingly.

According to one of the embodiments, the water inputting module 209 includes a water pump 291, a servomotor 293, a flowrate controller 295, and a thermometer 297, such that the water inputting module 209 controls the water volume through the water pump 291 according to the brewing parameters, controls the flowrate through the servomotor 293 and the flowrate controller 295, and obtains the water temperature through the thermometer 297. The temperature adjusting module 211 determines the water temperature of the tubular container 201, and the temperature adjusting module 211 controls a heating device therein or a cooling device therein, e.g., a thermoelectric chip, a condensate pipe, or a heating pipe, serving as a first cooling device 2111 (in which an air adding procedure can be set), a second cooling device 2113 (from which the air adding procedure can be excluded), and a heating device 2115 (which provides hot beverages), corresponding to different brewing procedures, respectively.

Subsequently, according to the brewing parameters, the microprocessor 20 controls the volume and the flowrate of the water inputted into the tubular container 201 by the water inputting module 209, which includes a thermometer 297 that monitors the temperature of the water inputted into the tubular container 201, and the microprocessor 20 receives a temperature feedback from the outputting water temperature to the temperature adjusting module 211, such that the microprocessor 20 can continuously adjust the temperature of the water in the tubular container 201. Moreover, the water outputting module 213 can further send feedback signals to the microprocessor 20, such that the microprocessor 20 controls (adjusts) the volume and the flowrate of the water inputted by the water inputting module 209.

As shown in FIG. 3, in one embodiment, an exemplary implementation is made with the brewing procedure proceeding with cooling first, the air adding module 215 determines whether or not to add air into the water that has been cooled according to the brewing parameters. When it is determined that air is added, the air adding module 215 controls an air adding device 2151 thereof, which can be a carbon dioxide (CO₂) adding device, to determine the amount of air added into the water. The water having air added therein can then be inputted into the tubular container 201, the contents in the tubular container 201 can be brewed, and a beverage 217 can then be formed.

Reference is made to FIG. 4, which is a block diagram showing the operation of the components of the beverage brewing device in another embodiment of the present disclosure. Compared to the operation shown in FIG. 3, in which the temperature adjusting module 211 conducts the cooling and then the air adding module 215 adds air in the water, the operation shown in FIG. 4 provides another air adding module 215', which is adjusted to be arranged before the temperature adjusting module 211 and the water outputting module 213.

As shown in FIG. 4, the microprocessor 20 controls the water inputting module 209 to provide water according to the brewing parameters, and then controls the air adding module 215' to add air into the water. Afterwards, the water having air added therein is transferred to the temperature adjusting module 211 for heating or cooling, and then the water having air added therein is inputted into the tubular container 201 by the water inputting module 209 after brewing the contents in the tubular container 201, thereby forming the beverage 217.

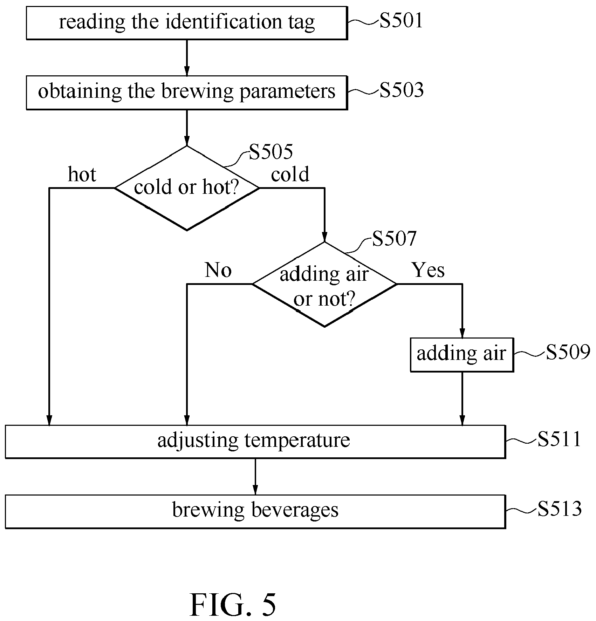

Reference is made to FIG. 5, which is a flowchart showing the beverage brewing device controlling a brewing procedure according to the brewing parameters in another embodiment of the present disclosure. The brewing procedure is adapted to the above-mentioned beverage brewing device. According to one of the embodiments, in the beginning of the brewing procedure, a tubular container having contents inside is disposed in the beverage brewing device, the tubular container can be filled with a single ingredient or a mixture of multiple ingredients in a predetermined ratio, and the tubular container can be configured as a combination of a plurality of tubular containers filled with different contents.

In step S501, the scanning module of the beverage brewing device scans the identification tag on the tubular container, and in step S503, the microprocessor of the beverage brewing device obtains the brewing parameters corresponding to the contents in the tubular container, and the microprocessor can control the parameter controlling module to generate the operating parameters controlling the water inputting module, the temperature adjusting module, the water outputting module, and the air adding module, so as to operate a brewing procedure.

According to one of the embodiments, the operating parameters can include details such as water temperature (cold or warm), time (an amount of time for brewing), flowrate (concentration and ratio of water), additives (milk, honey, etc.), sugar (sweetness), etc.

Furthermore, the water inputting module can determine the volume and the flowrate of the water inputting to the tubular container according to the operating parameters, and the brewing procedure of determining whether the beverage is hot or cold can be conducted (S505). When the beverage is determined to be cold, whether or not to add air in the water can be determined according to the brewing parameters in S507. When air is determined to be added into the water, the air adding module of the beverage brewing device determines the amount of air to be added into the water in S509. Afterwards, in step S511, the microprocessor controls the temperature adjusting module to control the temperature and the temperature controlling sequence according to the operating parameters, so as to adjust the contents in the tubular container, and the water outputting module determines the amount of time and the flowrate of water outputted from the tubular container according to the operating parameters. The water having air added therein is then transferred to the tubular container to brew the contents therein, and the beverage is produced (step S513). In addition, when it is determined that no air is required to be added into the water in step S507, step S509 will not be conducted, and only step S511 and step S513 are conducted.

On the other hand, when the beverage is determined to be hot in step S505, step S511 can be directly conducted, the temperature adjusting module controls the temperature and the temperature controlling sequence according to the operating parameters, so as to adjust the contents in the tubular container, and the water outputting module determines the amount of time and the flowrate of water outputted from the tubular container according to the operating parameters. The water is then transferred to the tubular container to brew the contents therein to produce the beverage (S513).

In the above-mentioned brewing procedure, the step of determining whether or not to add air into the water can be arranged before or after the temperature adjusting module controls the temperature of the water, and the beverage is then brewed with the water.

It should be noted that, in the brewing procedure, the beverage brewing device can detect whether or not the tubular container is configured properly though a detecting circuit and a feedback of whether or not the beverage is brewed can be sent by the detecting circuit.

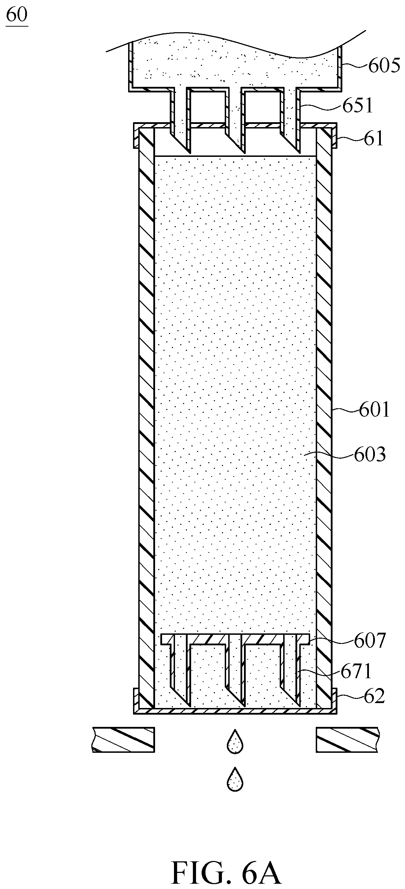

The above-mentioned tubular container utilized in the beverage brewing device can be referred to FIG. 6A, which is a sectional schematic view of a tubular container in one embodiment of the present disclosure. A tubular container 60 is described in FIG. 6A, and the tubular container 60 is a tubular container with openings on two sides thereof. The tubular container 60 includes a tube wall 601 accommodating concentrate ingredients 603 (concentrate solutions or concentrate powder), and an entrance component 61 and an exit component 62 are disposed on the two sides of the tube wall 601. The entrance component 61 and the exit component 62 can be penetrable thin films or related materials and components, such that the contents, e.g., the concentrate ingredients 603, are sealed among the entrance component 61, the exit component 62, and the tube wall 601.

The entrance component 61 and the exit component 62 can be thin films manufactured with different, similar, and identical materials, or components manufactured with certain materials according to actual purposes. In addition to functions of sealing (blocking air from the outside, as in the function of plastic wrap) the concentrate ingredients 603 inside, the thin films (serving as the entrance component 61 and the exit component 62) can also be materials that are penetrable, soluble in water or certain solvents, and breakable under high pressure. Moreover, the entrance component 61 and the exit component 62 can also be made of polyethylene terephthalate (PET), polyvinyl chloride (PP), polyethylene (PE), metal, etc.

In one embodiment, the entrance component 61 is disposed on an entrance end of the tubular container 60. The beverage brewing device includes a first penetrating and water supplying component 605 including one or more first protrusions 651 which are utilized to penetrate the entrance component 61, and each of the one or more first protrusions 651 has a hollow structure for water or certain fluids to flow through, such that the water or certain fluids can be injected into the tubular container 60, and the present disclosure is not limited to the form and quantity of the one or more first protrusions 651. The exit component 62 is disposed on an exit end of the tubular container 60. The beverage brewing device further includes a second penetrating component 607 including one or more second protrusions 671 which are utilized to penetrate the exit component 62, and each of the one or more second protrusions 671 has a hollow structure for water or certain fluids to flow through, such that the brewed beverage flows through. In addition, an operation of the first penetrating and water supplying component 605 and the second penetrating component 607 is realized by the beverage brewing device controlling the first penetrating and water supplying component 605 and the second penetrating component 607 to penetrate through the entrance component 61 and the exit component 62 respectively via a control method. In another embodiment, water pressure can be utilized to push the first penetrating and water supplying component 605, so as to penetrate the entrance component 61 of the tubular container 60, and when brewing is completed, the water pressure can also push the second penetrating component 607 to penetrate the exit component 62 of the tubular container 60.

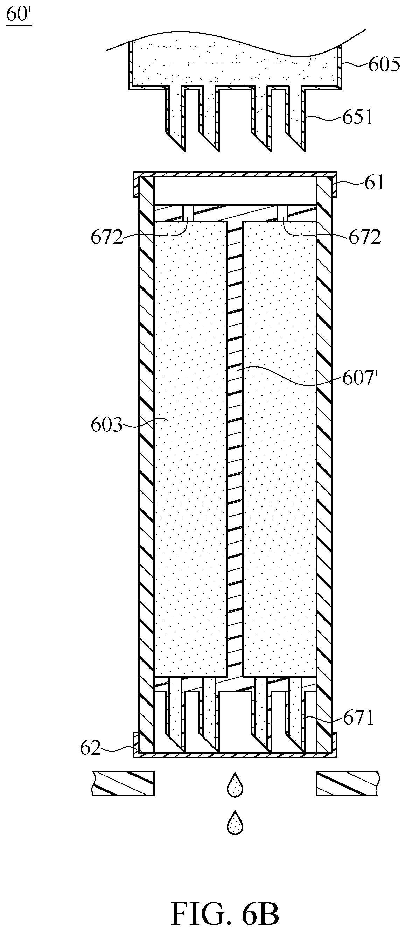

Reference is made to FIG. 6B, which is another schematic view of a tubular container in one embodiment of the present disclosure. In one embodiment, a tubular container 60' and a second penetrating component 607' thereof have different structures from that shown in FIG. 6A.

The sectional schematic view of the tubular container 60' shows that the second penetrating component 607' has an I-shaped structure, and two ends of the second penetrating component 607' are plate-shaped structures (round, square, and other shapes) that are tightly engaged with (tube wall of) the tubular container 60'. The plate-shaped structure adjacent to the entrance component 61 on an upper side of the second penetrating component 607' can include one or more through holes 672 such that when the first penetrating and water supplying component 605 penetrates the entrance component 61, the water or certain fluids that flow into the tubular container 60' can be guided through the one or more through holes 672 and continuously flow into the tubular container 60' and be mixed with the concentrate ingredients 603. Afterwards, one or more second protrusions 671 of another one of the plate-shaped structure on a lower side of the second penetrating component 607' penetrates the exit component 62, and the beverage flows out thereafter.

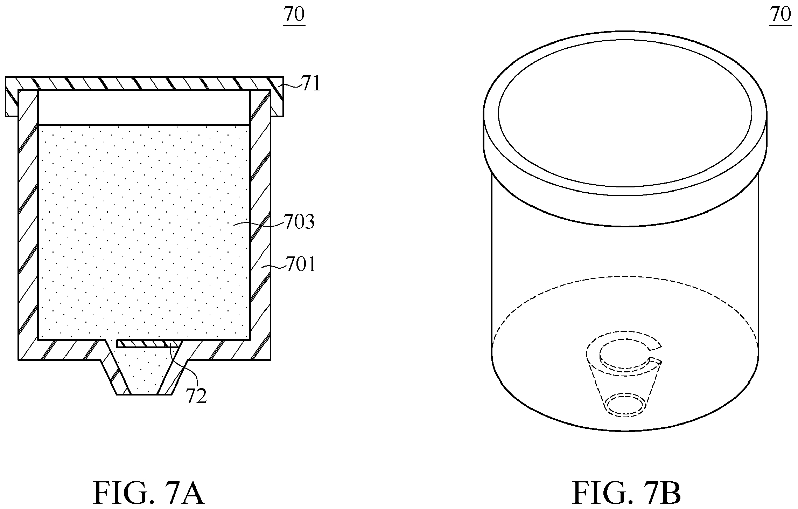

References are made to FIG. 7A and FIG. 7B.

FIG. 7A is a sectional schematic view of the tubular container in another embodiment of the present disclosure. As shown in FIG. 7A, a tubular container 70 has a long tube wall 701, which has a shape of a cylinder, a square column, or a column in any shape. The tube wall 701 is preferably made of reusable and recyclable materials, and more particularly a heat resistive material and a pressure resistive material. The tubular container 70 formed by the tube wall 701 and an entrance component 71 and an exit component 72 at two sides thereof is filled with concentrate ingredients 703 for brewing. The entrance component 71 can be made of water permeable materials or penetrable materials, and the exit component 72 can be designed as a thin film, which can be made of water permeable materials or water soluble materials. When the exit component 72 is made of a water soluble material, the exit component 72 can be dissolved upon contacting water or certain fluids (injected from the outside), so as to produce the beverage.

In another embodiment, the exit component 72 can be designed as a thin film which breaks when the water pressure reaches a threshold, such that the beverage flows out. In addition, the exit component 72 can be designed as a valve which opens when the water pressure reaches a threshold, such that the beverage flows out of the tubular container 70.

It is worth mentioning that, when the tubular container 70 is utilized in certain beverage brewing devices, each type of the beverage brewing devices can be compatible to the tubular container 70; or on the contrary, each type of the beverage brewing devices can be compatible to only the tubular container 70 for each of the types, respectively. Moreover, a design of the tubular container 70 should be in compliance with that of the compatible beverage brewing device in length, exit diameter, material, and content weight, ingredients, and characteristics of the contents. Otherwise, the tubular container 70 will be incompatible to the beverage brewing device.

FIG. 7B is a schematic view of the tubular container in another embodiment of the present disclosure. As shown in FIG. 7B, the tubular container 70 has an exit component in the shape of a funnel. It is worth mentioning that the tubular containers 70 can be connected to one another; therefore, when the exit component of one of the tubular containers 70 is connected to another one of the tubular containers 70, the exit component is configured as a structure penetrating the another one of the tubular container 70, and the engagement between each two of the tubular containers 70 are further improved.

In a design related to the tube lengths of the above-mentioned tubular containers (the tubular container 60 in FIG. 6A and FIG. 6B and the tubular container 70 in FIG. 7A and FIG. 7B), only a longest length for each of the tubular containers is defined; in other words, tubular containers with lengths shorter than the longest length will be compatible to the beverage brewing device. In addition, the design can configure two or more tubular containers in one of the beverage brewing devices through stacking, as long as the tubular containers do not exceed the longest length. That is to say, the tubular container can be a combination of a plurality of tubular containers filled with different contents.

It should be noted that the tube wall of the tubular containers can be made of transparent, translucent, or certain materials, or the identification tag may be marked on the outside, such that, when the tubular containers are to be used on the beverage brewing device for brewing beverages, a part of each of the tubular containers is exposed, such that the user can see the brewing process from the outside or that the contents of the tubular container can be known directly from the identification tag on the tubular container. Therefore, the tubular containers can be utilized in the following implementations.

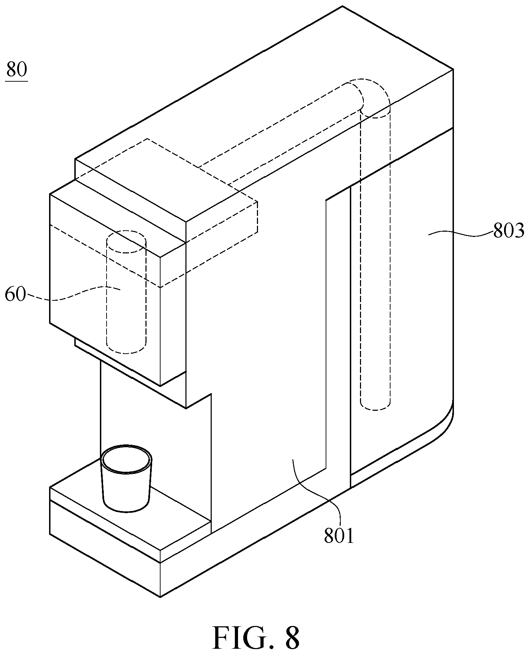

Reference is made to FIG. 8, which is a schematic view showing the tubular container of the beverage brewing device in use in one embodiment of the present disclosure. As shown in FIG. 8, a beverage brewing device 80 is provided and has a unique design of a beverage outlet, which is presented only for the purposes of illustration and description and is not intended to be exhaustive or to limit the disclosure, and the basic concept of the beverage brewing device can be understood and realized by a person having ordinary skill in the art, the beverage brewing device 80 merely utilizes the above-mentioned tubular containers 60 and 70. The beverage brewing device 80 in the embodiment includes one of the tubular containers 60 and 70, and in practice, the beverage brewing device 80 can be different types of beverage brewing devices respectively utilizing one or more than one of the tubular containers 60 and 70. The beverage brewing device 80 includes a main body 801 and a water supplying device 803 disposed on a side. When operating, water from the water supplying device 803 can be guided to a heater (or a cooler) by the pump, and then flow into the tubular containers 60 and 70 through related pipelines, such that the contents therein can be brewed and made into beverages after being left for a period of time, or put under a pressure.

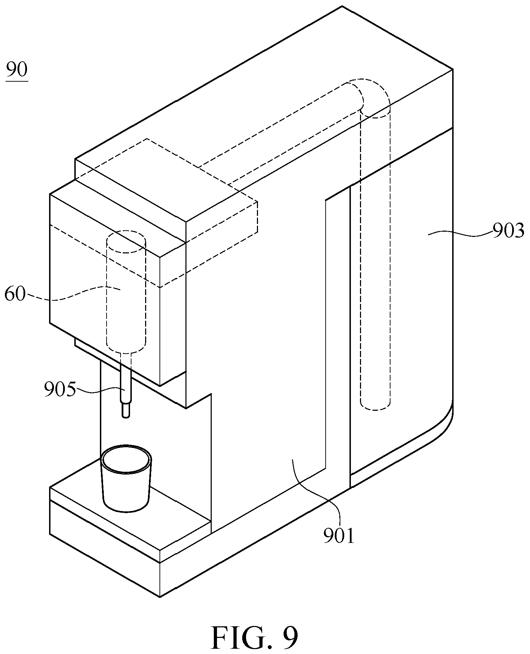

Reference is made to FIG. 9, which is a schematic view showing the tubular container of the beverage brewing device in use in another embodiment of the present disclosure. As shown in FIG. 9, a beverage brewing device 90 similar to that in FIG. 8 is provided, and the beverage brewing device 90 includes a main body 901 and a water supplying device 903. After the tubular containers 60 and 70 are configured in the beverage brewing device 90 and the contents of the tubular containers 60 and 70 are brewed, the beverages can be outputted through a tubular outlet 905.

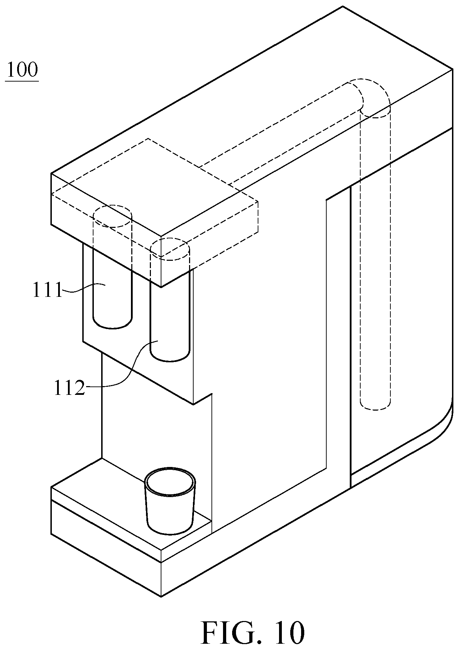

Reference is made to FIG. 10, which is a schematic view showing the tubular container of the beverage brewing device in use in yet another embodiment of the present disclosure. As shown in FIG. 10, a first tubular container 111 and a second tubular container 112 can be configured in a beverage brewing device 100 simultaneously. For example, the first tubular container 111 can be filled with a concentrate ingredient having a single flavor (taste), which are original ingredients having the flavor (the taste) without adding additives. In another embodiment, when a user has an alternative request, the second tubular container 112 can be added, and the first tubular container 111 can be a concentrate ingredient having a single flavor (taste), such as coffee powder, and the second tubular container 112 can be filled with other additives, such as chocolate, matcha, creamer, milk powder, sugar, etc., which can be adjusted by the user according to actual requirements. Therefore, the beverage brewing device can process the contents of the first tubular container 111 and the second tubular container 112 separately, such that the outputted beverages are more diversified.

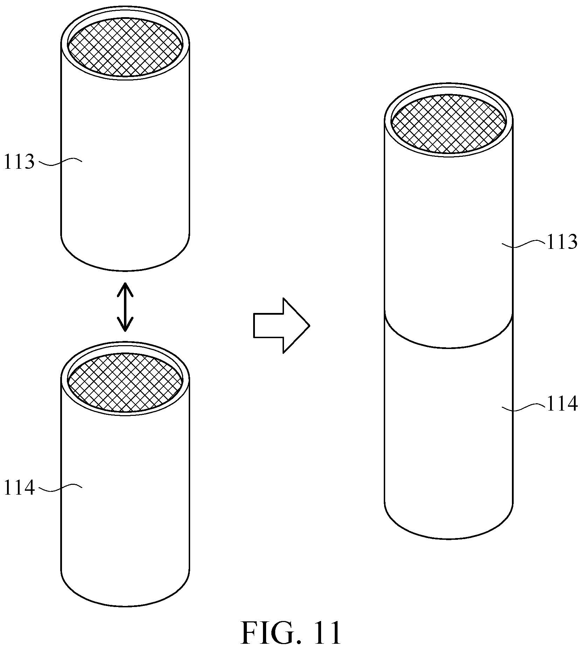

Reference is made to FIG. 11, which is a schematic view showing a tubular container adjustably used in cooperation with brewing of the present disclosure. The size and the structure of the tubular container are suitable for being configured to the beverage brewing device. As shown in FIG. 11, the tubular container is a combination of a plurality of shorter tubular containers, which are a third tubular container 113 and a fourth tubular container 114. The combined length of the third tubular container 113 and the fourth tubular container 114 conforms to the limitation of the longest length, such that the third tubular container 113 and the fourth tubular container 114 that are stacked upon each other are fit for being configured in (the carrying structure of) the beverage brewing device.

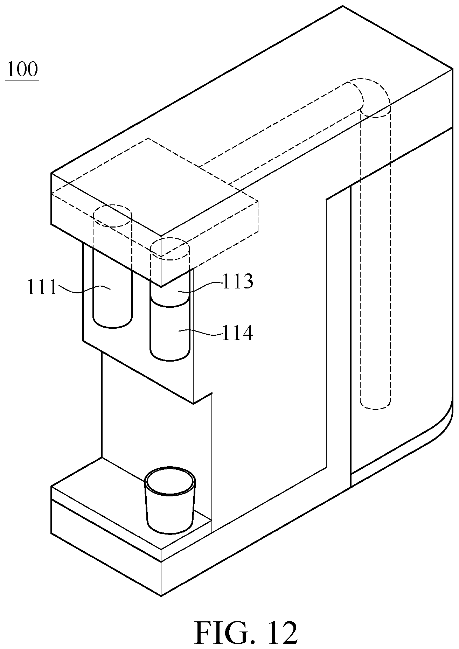

Reference is made to FIG. 12, which is a schematic view showing the tubular container of the beverage brewing device in use in still another embodiment of the present disclosure. As shown in FIG. 12, the beverage brewing device is compatible for two tubular containers, but the lengths of the two tubular containers can be different. For example, one of the two tubular containers can be the first tubular container 111 and the other one of the two tubular containers can be a combination of the third tubular container 113 and the fourth tubular container 114 (as shown in FIG. 11). The third tubular container 113 and the fourth tubular container 114 are still fit for (the carrying structure of) the beverage brewing device after stacking upon each other.

It is worth mentioning that, the third tubular container 113 and the fourth tubular container 114 are tubular containers with openings on both ends, which are sealed by the above-mentioned thin films (the entrance component and the exit component), and are filled with ingredients for brewing certain beverages. When water is injected in one side of the combination of the third tubular container 113 and the fourth tubular container 114 that are tightly engaged with each other, the water can flow through the two tubular containers 113 and 114, such that different ingredients in the third tubular container 113 and the fourth tubular container 114 can be brewed together, and then eventually be mixed with the beverage from the first tubular container 111, thereby automatically obtaining the beverages with certain flavors.

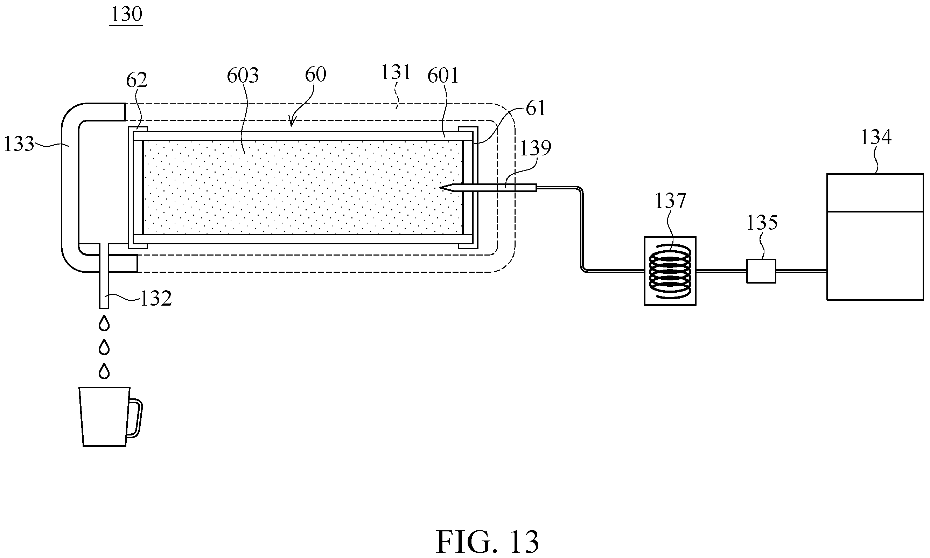

Reference is made to FIG. 13, which is a schematic view showing the beverage brewing device used in cooperation with the tubular container to brew beverages in one embodiment of the present disclosure. As shown in FIG. 13, a brewing system 130 of the beverage brewing device is provided, and the brewing system 130 includes structures, circuits, and controlling software, which are presented in figures, but the figures can be understood and realized by a person having ordinary skill in the art.

In the brewing system 130, referring to the tubular container 60 (including the tube wall 601 and the concentrate ingredients 603) shown in FIG. 6, the tubular container 60 is configured on a carrying structure 131 of the beverage brewing device. In addition to the manner of configuring the tubular container 60 to the beverage brewing device vertically, the tubular container 60 can also be configured on the carrying structure 131 of the beverage brewing device horizontally. The tubular container 60 can be properly connected to components in the brewing system 130 via the carrying structure 131, such that the tubular container 60 is in an accommodating space isolated from the air and prevented from being affected by the temperature on the outside.

In one embodiment, one of the sides of the tubular container 60 (e.g., the entrance component 61) is configured toward the inside of the brewing system 130 and configured on the carrying structure 131, and then sealed and fixed with a cover 133. The tubular container 60 is configured on the carrying structure 131 of the brewing system 130, and a penetrating structure 139 penetrates the entrance component 61, so as to inject water or certain fluids to brew the concentrate solutions and the concentrate powders in the tubular container 60. Afterwards, the exit component 62 outputs the beverage.

The brewing system 130 includes a water supplying device 134, mainly for accommodating water, the water is pumped by a pump 135 to flow to a heater 137, which outputs the water with controlled temperature, and then is injected to the tubular container 60 through the penetrating structure 139 to brew the concentrate ingredients 603. Afterwards, the beverage can be outputted through the exit component 62 through a design of control parameters such as time, flowrate, temperature, etc., and then flow to a cup via a specific flow guiding structure 132.

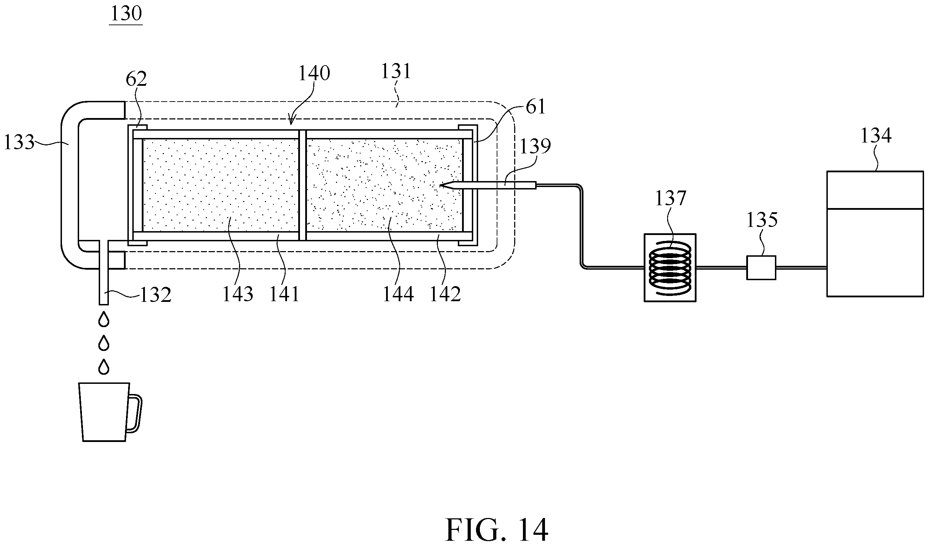

Reference is made to FIG. 14, and the brewing system 130 shown in FIG. 14 is similar to that shown in FIG. 13. The brewing system 130 shown in FIG. 14 includes a tubular container 140 which includes a first tubular container 141 and a second tubular container 142. The first tubular container 141 and the second tubular container 142 have relatively short lengths respectively, but the total length are still fit for being configured on the carrying structure 131 of the brewing system 130 and are compatible for the beverage brewing device. The first tubular container 141 and the second tubular container 142 are filled with different concentrate ingredients or certain brewing ingredients 143 and 144. An end of the combined tubular container 140 is arranged toward the inside of the beverage brewing device, and the tubular container 140 can be penetrated by the penetrating structure 139 and then injected with water (or certain fluid). The water can flow through respective entrance components and exit components of the first tubular container 141 and the second tubular container 142, and then conduct brewing under a certain amount of time and a certain pressure. It is worth mentioning that when two or more tubular containers are connected with each other and configured in the beverage brewing device, the two or more tubular containers are required to have structures for tightly engaging with each other, e.g., a snap and buckle structure, an air-tight structure, a sheath connector structure, etc., so as to reduce the problem of the fluid and the ingredients from leaking under pressure.

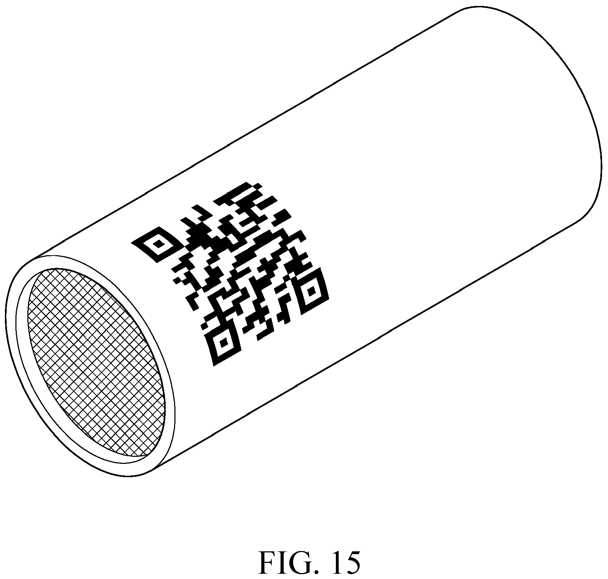

Reference is made to FIG. 15, which is a schematic view of the present disclosure showing the tubular container having an identification tag thereof. For example, the identification tag can be a QR code, which is one of the methods for identifying the contents and the brewing methods of the tubular containers, respectively. For example, the user can utilize the function of scanning a QR code of a mobile device to obtain the information of the contents and the brewing methods through the corresponding applications (APP) or web pages of the QR code on the tubular container.

Furthermore, the beverage brewing device can include a reader for reading the identification patterns and identification codes. When a tubular container is configured in the beverage brewing device, the reader reads the brewing parameters encoded in the QR code, and forms an executing command of a controller of the beverage brewing device (the brewing system), such that the controller controls circuits therein to conduct the brewing procedure. For example, according to the parameters of temperature, time, and pressure read by the controller, the controller controls a heater (or a cooler) to output fluids with a certain temperature, controls a structure carrying the tubular container to maintain the concentrate at a certain temperature and a certain pressure with a certain period of time, and then outputs the beverage that is brewed.

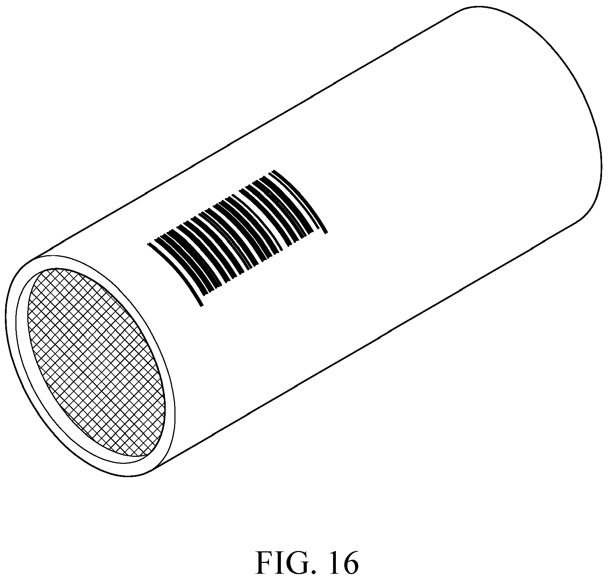

Reference is made to FIG. 16, which is a schematic view of the present disclosure showing the tubular container having another identification tag thereof. The identification tag of the tubular container utilizing wireless transmission technologies such as RFID is not excluded in the present disclosure.

In one of the embodiments, the beverage brewing device includes a display panel, and when the beverage brewing device reads the identification tags shown in FIG. 15 and FIG. 16, or reads the identification tag of the tubular container utilizing other methods, the beverage brewing device can present the information read from the identification tag on the display panel for the user, or operate the beverage brewing device accordingly.

In conclusion, embodiments of the beverage brewing device, the brewing method, the tubular container, and the circuit system of the beverage brewing device are provided in the present disclosure. The beverage brewing device and the brewing method can be realized by the cooperation of software and hardware. The tubular container is compatible for the beverage brewing device, and can be filled with a single ingredient or a mixture of multiple ingredients mixed in a predetermined ratio. The tubular container can be a single tubular container or a combination of a plurality of different tubular containers filled with different contents respectively, so as to produce more diversified beverages and more flexible combinations of the ingredients for brewing beverages.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A beverage brewing device (10, 10'), **characterized in that** the beverage brewing device (10, 10') comprising:
a built-in or external sink (101);
a pump (103);
a container carrying device (105) for configuring a tubular container (14);
a beverage outlet (107) for injecting beverages brewed from contents in the tubular container (14) into a container; and
a circuit system, including:
a microprocessor (20) connected to a plurality of circuit components in the circuit system for controlling an operation of the beverage brewing device (10, 10');
a scanning module (203) for scanning an identification tag (222) on the tubular container (14) of the beverage brewing device (10, 10'), wherein the microprocessor (20) obtains brewing parameters read from the identification tag (222); and
a parameter controlling module (207) receiving the brewing parameters and generating operating parameters that control a water inputting module (209), a temperature adjusting module (211), a water outputting module (213) and an air adding module (215, 215');
wherein the water inputting module (209) controls a volume and a flowrate of water supplied to the tubular container (14) according to the operating parameters, the temperature adjusting module (211) controls temperature of water supplied to the tubular container (14) by controlling the temperature and adjusting a temperature controlling sequence according to the operating parameters, the water outputting module (213) determines an amount of time and the flowrate of water outputted from the tubular container (14) according to the operating parameters, and the air adding module (215, 215') determines whether or not to add air into the water, or an amount of air to be added into the water.

2. A circuit system of a beverage brewing device (10, 10'), **characterized in that** the circuit system comprising:
a microprocessor (20) connected to a plurality of circuit components in the circuit system for controlling an operation of the beverage brewing device (10, 10'), the circuit components including:
a scanning module (203) for scanning an identification tag (222) on the tubular container (201) of the beverage brewing device (10, 10'), wherein the microprocessor (20) obtains brewing parameters read from the identification tag (222); and
a parameter controlling module (207) receiving the brewing parameters and generating operating parameters that control a water inputting module (209), a temperature adjusting module (211), a water outputting module (213) and an air adding module (215, 215');
wherein the water inputting module (209) controls a volume and a flowrate of water supplied to the tubular container (201) according to the operating parameters, the temperature adjusting module (211) controls temperature of the water supplied to the tubular container (201) by controlling the temperature and adjusting a temperature controlling sequence according to the operating parameters, the water outputting module (213) determines an amount of time and the flowrate of water outputted from the tubular container (201) according to the operating parameters, and the air adding module (215, 215') determines whether or not to add air into the water, or an amount of air to be added into the water.

3. The circuit system according to claim 2, further comprising an interface controlling module (205) presenting the brewing parameters through a display panel (109) and providing a user interface for adjusting the brewing parameters.

4. The circuit system according to claim 3, wherein the identification tag (222) is an identification pattern or a wireless identification tag.

5. The circuit system according to claim 2, wherein the temperature adjusting module (211) controls a thermoelectric chip, a condensing tube, or a heating tube thereof, so as to control the temperature through heating or cooling.

6. The circuit system according to claim 5, wherein the temperature adjusting module (211) receives a temperature feedback from a thermometer (2131) of the water outputting module (213) and the microprocessor (20) continuously adjusts the temperature of the water outputted from the tubular container (201).

7. The circuit system according to claim 2, wherein the microprocessor (20) controls the water inputting module (209) to adjust the volume and the flowrate of the water supplied to the tubular container (201) according to a temperature feedback from the water inputting module (209).

8. The circuit system according to claim 2, wherein the tubular container (201)is filled with a single ingredient or a mixture of multiple ingredients mixed in a predetermined ratio.

9. The circuit system according to claim 2, wherein the tubular container (201) includes a combination of a plurality of tubular containers filled with different contents, respectively.

10. A brewing method, which is adapted to a beverage brewing device (10, 10'), **characterized in that** the brewing method comprising:
scanning an identification tag (222) on a tubular container (201) of the beverage brewing device (10, 10'), and obtaining brewing parameters corresponding to contents in the identification tag (222) by a microprocessor (20); and
generating operating parameters that control a water inputting module (209), a temperature adjusting module (211), a water outputting module (213) and an air adding module (215, 215') through a parameter controlling module (207) controlled by the microprocessor (20) according to the brewing parameters, so as to operate a brewing procedure, the brewing procedure including:
the water inputting module (209) controlling a volume and a flowrate of water supplied to the tubular container (201) according to the operating parameters;
the temperature adjusting module (211) controlling temperature of the water supplied to the tubular container (201) through controlling the temperature and adjusting a temperature controlling sequence according to the operating parameters;
the water outputting module (213) determining an amount of time and the flowrate of water outputted from the tubular container (201) according to the operating parameters;
the air adding module (215, 215') determining whether or not to add air into the water, or an amount of air to be added into the water; and
outputting water to the tubular container (201) to brew the contents in the tubular container (201) and generating a beverage.

11. The brewing method according to claim 10, wherein the step of the air adding module (215, 215') determining whether or not to add air into the water, or the amount of air to be added into the water according to the operating parameters, is conducted after the water outputting module (213) outputs the water, or before the temperature adjusting module (211) adjusts the temperature.

12. The brewing method according to claim 10, wherein, when obtaining the brewing parameters, the brewing parameters are presented on a display panel (109) and a user interface is provided for adjusting the brewing parameters.

13. The brewing method according to claim 10, wherein the temperature adjusting module (211) controls receives a temperature feedback from a thermometer (2131) of the water outputting module (213) and the microprocessor (20) continuously adjusts the temperature of the water outputted from the tubular container (201).

14. The brewing method according to claim 10, wherein the microprocessor (20) controls the water inputting module (209) to adjust the volume and the flowrate of the water supplied to the tubular container (201) according to a temperature feedback from the water inputting module (209).

15. A tubular container (60, 60', 70) having openings on two sides thereof, respectively, and being adapted to the beverage brewing device (10, 10') as claimed in claim 1, **characterized in that** the tubular container (60, 60', 70) comprising:
a tube wall (601, 701) having an entrance component (61, 71) and an exit component (62, 72) being disposed on the two sides of the tube wall (601, 701), respectively, such that the contents are sealed among the entrance component (61, 71), the exit component (62, 72), and the tube wall (601, 701).

16. The tubular container (60, 60', 70) according to claim 15, wherein the entrance component (61, 71) and the exit component (62, 72) are different, similar, or the same thin film materials or devices, and are used to seal the contents inside.

17. The tubular container (60, 60', 70) according to claim 15, wherein the entrance component (61, 71) and the exit component (62, 72) are made of a penetrable material, or a material that is soluble in a certain solvent.

18. The tubular container (60, 60', 70) according to claim 17, wherein the tubular container (60, 60', 70) further comprises a first penetrating and water supplying component (605) including one or more first protrusions (651) which are used to penetrate the entrance component (61, 71), and each of the one or more first protrusions (651) has a hollow structure.

19. The tubular container (60, 60', 70) according to claim 17, wherein the tubular container (60, 60', 70) further comprises a second penetrating component (607) including one or more second protrusions (671) which are used to penetrate the exit component (62, 72), and each of the one or more second protrusions (671) has a hollow structure.

20. The tubular container (60, 60', 70) according to claim 19, wherein the one or more second protrusions (671) includes a plate-shaped structure adjacent to the entrance component (61, 71), and the plate-shaped structure has one or more holes.

21. The tubular container (60, 60', 70) according to claim 15, wherein the tubular container (60, 60', 70) is filled with a single ingredient or a mixture of multiple ingredients mixed in a predetermined ratio.

22. The tubular container (60, 60', 70) according to claim 21, wherein a length, an exit diameter, a material, a content weight, an ingredient, and characteristics of the contents of the tubular container (60, 60', 70) are determined according to the beverage brewing device (10, 10').

23. The tubular container (60, 60', 70) according to claim 22, wherein the tubular container (60, 60', 70) includes a combination of a plurality of tubular containers filled with different contents, and the tubular containers are connected to one another through a buckle structure, an air-tight structure, or a sheath connector structure.
